Europäisches Patentamt

European Patent Office

Office européen des brevets

(19)

(11) Publication number: **0 097 387**

**A1**

(12) **EUROPEAN PATENT APPLICATION**

(21) Application number: **83200785.0**

(22) Date of filing: **01.06.83**

(51) Int. Cl.³: **F 16 K 1/20**

(30) Priority: **18.06.82 GB 8217689**

(43) Date of publication of application:
**04.01.84 Bulletin 84/1**

(84) Designated Contracting States:
**BE CH DE FR GB IT LI NL SE**

(71) Applicant: SHELL INTERNATIONALE RESEARCH
MAATSCHAPPIJ B.V.
Carel van Bylandtlaan 30
NL-2596 HR Den Haag(NL)

(72) Inventor: van Kessel, Matheus Maria
Badhuisweg 3
NL-1031 CM Amsterdam(NL)

(74) Representative: Puister, Antonius Tonnis, Mr. et al,
P.O. Box 302
NL-2501 CH The Hague(NL)

(54) **Valve for the flow control of a fluid comprising solid particles.**

(57) Valve for controlling the flow of a fluid comprising solid particles, comprising a valve housing (2) defining an elongated chamber (3), an inlet (4) for supplying a fluid comprising solid particles at one end of the chamber (3), and an outlet (5) for discharging the fluid at an opposite end of the chamber (3), the valve housing (2) comprising an elongated hingeably arranged element (8) for varying the cross-sectional area of at least a part of the chamber (3), the hingeably arranged element (8) defining a part of the elongated chamber (3) and having a free end facing the outlet (5).

FIG.1

EP 0 097 387 A1

VALVE FOR THE FLOW CONTROL OF A FLUID
COMPRISING SOLID PARTICLES

The invention relates to a valve for controlling the flow of fluid comprising solid particles. More in particular the invention relates to a valve for controlling the flow of a fluid comprising solid particles passing through a pipeline system.

When transporting solids through a pipeline system care should be taken that the solids flow is not hindered by obstructions in the pipeline system. Such obstructions will cause sudden changes in the flow direction of the transported solids, which may easily result in erosion of the pipeline system owing to impingement of the solids on the pipeline walls. Further, obstructions may easily form dead zones in the flow where solids might accumulate. Accumulation of solids might in its turn give rise to blocking and even plugging of the flow passages. Although pipelines can be made very smooth so that obstructions are prevented, problems occur when valves are to be incorporated in the pipelines for controlling the flow of solids.

Although a great variety of valves is known, for controlling fluid flows, these known valves are not adapted for solids flow since their interiors are provided with more or less severe obstructions, easily generating sudden changes which might result in erosion of the valves and dead zones in the flow.

The object of the invention is to provide a valve for controlling the flow of a fluid comprising solid particles wherein no obstructions causing erosion and/or the formation of dead zones are present in the valve.

The valve for controlling the flow of a fluid comprising solid particles according to the invention thereto comprises a valve housing defining an elongated chamber, an inlet for supplying a fluid comprising solid particles at one end of the chamber, and an outlet for discharging the fluid at an opposite end of the chamber, the valve housing comprising an elongated,

hingeably arranged element for varying the cross-sectional area of at least a part of the chamber, the hingeably arranged element defining a part of the elongated chamber and having a free end facing the outlet.

By the arrangement of an elongated hingeably arranged element having a free end facing the outlet, the cross-sectional area of the chamber can be so varied that a smooth passage of solids in the chamber is maintained upon decreasing the cross-sectional area of the chamber, in order to obviate the occurrence of inadmissable erosion and/or dead zones.

The invention will be further explained in more detail with reference to the accompanying drawings, wherein
Figure 1 shows a longitudinal section of a valve according to the invention;
Figure 2 shows cross section II-II of Figure 1;
Figure 3 shows cross section III-III of Figure 1; and
Figure 4 shows cross section IV-IV of Figure 1.

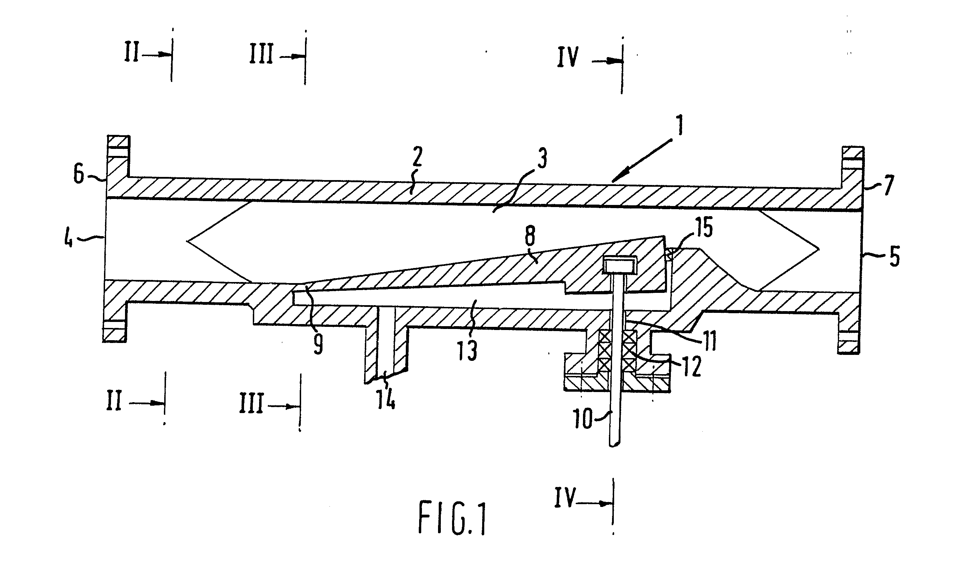

Figure 1 shows a valve 1 with a valve housing 2 defining an elongated chamber 3 having open ends 4 and 5 arranged opposite one another and forming an inlet and an outlet, respectively, for a flow of a fluid comprising solid particles. The valve housing 2 is provided with flanges 6 and 7 at the ends 4 and 5, respectively, for incorporating the valve 1 in a pipeline system.

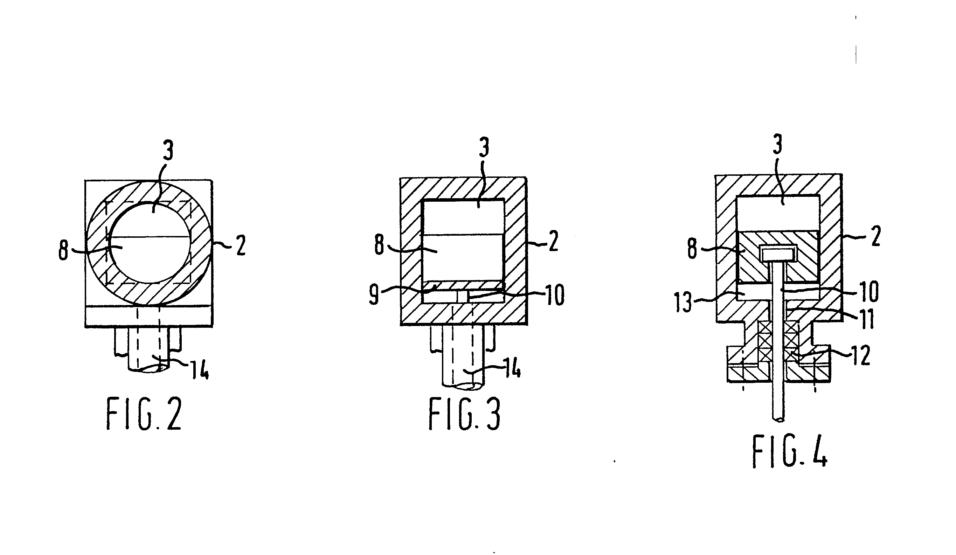

As shown in Figure 2 the cross section of the chamber near the inlet 4 thereof is circular. The shape of the chamber in cross section is gradually transformed into a rectangular one at cross section III-III shown in Figure 3. This rectangular shape of the cross section of the chamber is further transformed into an oblong shape in the central part of the chamber 3 as shown in Figure 4. Towards the outlet 5, the oblong shape is further transformed into a rectangular shape and back into a circular one at the outlet 5 allowing a smooth discharge of solids from the chamber 3 into a pipeline (not shown) connected to the outlet 5.

For varying the cross-sectional area of a part of the chamber 3, the valve housing 2 comprises a hingeably arranged element 8, the inner surface thereof forming part of the inner surface of the valve housing 2. The free end of the element 8 faces the outlet 5 of the chamber 3. The element 8, having a rectangular shape , is provided with a relatively thin part 9 near its end connected to the remainder of the valve housing 2. This part 9 should be sufficiently thin to have enough flexibility for allowing inward displacement of the free end of the element 8. For displacing the element 8 a rod-shaped element 10 is connected to the element 8 near its free end.

The  rod-shaped element 10 passes through a channel 11 in the valve housing 2. To prevent leakage of the valve between the rod-shaped element 10 and the channel 11 sealing rings 12 surround the rod-shaped element 10. Between the hingeably arranged element 8 and the remainder of the valve housing 2 a gap 13 is present, wherein the width thereof varies with the displacement of the element 8.

Entrance of solids from the chamber 3 into the gap 13 is prevented by introducing purge gas into the gap 13 via a channel 14 in the valve housing 2. The  purge gas leaves the gap 13 via a small slit-shaped opening between the element 8 and a layer 15 of sealing material connected to the non-displaceable part of the valve housing 2.

When a fluid comprising solid particles is passed through the valve 1 the fluid smoothly flows from the circular part of the chamber 3, into the rectangular part thereof and further into the oblong part of the chamber 3, without encountering any obstructions, so that no dead zones where solids could accumulate will occur in the chamber 3. In the shown position the part of the chamber 3 having an oblong shape in cross section, is partly closed by the element 8. At the outlet of the oblong shaped part of the chamber 3 the fluid enters a further part of the chamber having a rectangular shape in cross section via a diverging part and from there into the circular part of the chamber at the outlet 5 where the fluid is discharged from the valve.

When the throughput of the valve is to be increased the element 8 is retracted by not shown actuator means connected to rod-shaped element 10. The actuator means may be coupled to means for controlling the flow rate of the mass of solids for automatically regulating the passage in the chamber 3. In the fully retracted position the inner wall of element 8 is aligned with the inner wall of the valve housing 2 downstream of the element 8.

The shown embodiment is provided with a single element 8. Instead thereof, it is possible to apply a plurality of hingeably arranged elements 8. Two of such elements 8 may for example be applied, forming opposite walls of the chamber 3.

Further the invention is not restricted to a valve wherein the central part of the chamber has an oblong shaped cross section in the retracted position of the element 8. Instead thereof, this central part may be for example of rectangular cross section just as the adjacent parts of the chamber 3.

It should be noted that in the inward position of the element 8, the space between the free end of the element 8 and the adjacent part of the inner wall of the valve housing 2 is kept free from solids by the purge gas from the gap 13.

Instead of a thin region in the element 8 allowing displacement thereof, a hinge may be applied at the end of the element 8 facing the inlet 4.

The free end of the element 8 does not need to be flat-shaped. It may be advantageous to provide a convex-shaped free end, while the inner wall of the valve housing 2 is concave-shaped so that the free end nicely fits the inner wall. In this way the layer 15 of sealing material is not deformed when the element 8 is moved.

Finally, it is remarked that instead of a flat-shaped inner surface the hingeably arranged element 8 may be for example provided with a different shaped inner surface, such as a concave inner surface, for allowing a smooth passage of fluid through the valve.

## C L A I M S

1. Valve for controlling the flow of a fluid comprising solid particles, comprising a valve housing defining an elongated chamber, an inlet for supplying a fluid comprising solid particles at one end of the chamber, and an outlet for discharging the fluid at an opposite end of the chamber, the valve housing comprising an elongated hingeably arranged element for varying the cross-sectional area of at least a part of the chamber, the hingeably arranged element defining a part of the elongated chamber and having a free end facing the outlet.

2. Valve as claimed in claim 1, wherein the said part of the elongated chamber has a rectangular shape in cross section.

3. Valve as claimed in claim 2, wherein the said part of the elongated chamber has an oblong shape in cross section.

4. Valve as claimed in any one of the claims 1-3, wherein a gap is present between the elongated hingeably arranged element and the adjacent part of the valve housing.

5. Valve as claimed in claim 4, further comprising means for purging the gap.

6. Valve as claimed in any one of the claims 1-5, further comprising a rod-shaped element passing through an opening in the valve housing and connected to the elongated hingeably arranged element for displacement thereof.

7. Valve as claimed in any one of the claims 1-6, wherein the elongated hingeably arranged element has a thin region allowing movement of the element.

8. Valve as claimed in any one of the claims 1-7, wherein the valve housing comprises one elongated hingeably arranged element.

9. Valve as claimed in any one of the claims 1-7, wherein the valve housing comprises two elongated hingeably arranged elements, arranged at opposite sides of the chamber.

10. Valve for controlling the flow of a fluid comprising solid particles substantially as described with particular reference to the accompanying drawings.

0097387

1/2

FIG.1

FIG. 4

FIG. 3

FIG. 2

European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-2 025 665 (DICKINSON)<br>* Page 1, column 1, lines 17-20; column 2, lines 13-20; figures 1, 2, 5 * | 1-4,6, 8,9 | F 16 K 1/20 |
| A | DE-U-1 903 321 (EVERS)<br>* Claim 3; figures 1-3 * | 1-4,6, 8 | |
| A | DE-U-1 894 519 (WIDENMANN)<br>* Claim 1; figures 1, 2 * | 5 | |
| A | DE-B-1 252 992 (STRATE)<br>* Figure 1 * | 7 | |
| A | DE-C-1 155 649 (LICENTIA PATENT-VERWALTUNGS-GMBH) | | |

**TECHNICAL FIELDS SEARCHED (Int. Cl. ³)**

F 16 K 1/00
F 16 K 5/00
F 16 K 7/00
F 16 K 27/00
F 16 K 15/00
F 16 K 51/00

The present search report has been drawn up for all claims

| Place of search | Date of completion of the search | Examiner |
|---|---|---|
| BERLIN | 19-08-1983 | SCHLABBACH M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82